# EUROPEAN PATENT SPECIFICATION

(11) **EP 3 023 738 B1**
(45) Date of publication and mention of the grant of the patent: **19.07.2017**
(21) Application number: 15382468.5
(22) Date of filing: 28.09.2015
(51) Int. Cl.: G01B 11/275, G01B 21/26, G01M 17/007

(54) **SERVICE UNIT FOR VEHICLE DIRECTION ALIGNMENT**
WARTUNGSEINHEIT ZUR AUSRICHTUNG DER FAHRTRICHTUNG EINES FAHRZEUGS
UNITÉ DE SERVICE POUR L'ALIGNEMENT DE DIRECTION D'UN VÉHICULE

(30) Priority: 19.11.2014 ES 201431491 U
(43) Date of publication of application: 25.05.2016
(73) Proprietor: Noroto Sau, 46100 Burjassot (ES)
(72) Inventor: Sánchez Cervera, José Noé, 46100 Burjassot (ES)
(74) Representative: Sahuquillo Huerta, Jesús

(56) References cited:
- CN-U- 202 869 831
- DE-U1-202007 018 657
- US-A- 5 295 073
- US-A1- 2011 077 900
- Snap-on Equipment Ltd.: "Hofmann Geoliner 580 Prism (product brochure)", , May 2012 (2012-05), XP055251490, Retrieved from the Internet: URL:http://hofmann.snaponequipment-eu.mycd mm.de/product/314241 [retrieved on 2016-02-18]

## Description

### Object of the invention

The present invention is designed to be a service unit for vehicle direction alignment, particularly for automobile wheel alignment or similar, where the required elements for the wheel alignment are integrated in the same space, providing a greater security to the operator responsible for it.

### Background of the invention

Currently, the vehicle direction alignment is known as the action or procedure that consists of putting the wheels parallel to each axis, and the axes parallel to each other, by adjusting the different wheel angles so that they are set to the car maker's specification.

To perform that action the vehicle must be placed safely on a platform that will lift the vehicle (or on a platform with a gap where the operator can manipulate the car's axles and wheels of the vehicle), leaving the lower part of the vehicle accessible to manipulation by the operator responsible for implementing the action.

Other than the necessary hand tools for such action, the operator needs, in an auxiliary manner, a computer located in a service unit to help him set properly the vehicle's parameters of the wheels and axles, supplied by the manufacturer. This computer is usually integrated in a wheeled auxiliary unit, which usually moves as required by the operator.

In the art it is well known the structure disclosed in CN 202 869 831 U. The utility model discloses a height-adjustable 3D four-wheel aligner. The height-adjustable 3D four-wheel aligner mainly comprises a sectional-type column, a targeting device arranged on the sectional-type column, a computer device arranged on the sectional-type column, a printing device arranged on the sectional-type column and a crossbeam assembly arranged on the sectional-type column, wherein the sectional-type column has a split structure and can be split into an upper part, a middle part and a lower part which are interconnected by screws. According to the utility model, the height of the support crossbeam assembly of the sectional-type column can be adjusted based on the detection requirements of vehicle maintenance, facilitating the operation of the maintenance personnel, and the crossbeam assembly is provided with an LCD display screen, so that the detection data can be synchronously displayed, providing convenience for use in conditions without a lifter; besides, the column has a split structure, so that if the aligner is used the conditions with a lifter, the components can be integrated so as to obtain a small size, providing compact layout and requiring small space. The height of the crossbeam assembly can be flexibly fixed according to the application conditions, and the sectional-type column can be mounted at a proper position according to the situation of the ground.

The operation has the major drawback of not having any help or auxiliary security mechanism, in the event that the vehicle has not been sufficiently fixed on the platform, so that a neglect or malpractice, could lead to an accident with serious consequences for the physical integrity of the operator or bystanders in the workshop.

### Description of the invention

The technical problem solved by the current invention is to achieve an auxiliary element for the wheel alignment integrating those moving parts required by the operator to perform a correct alignment of the car's direction. For this, the service unit for the alignment of a vehicle's direction according to claim 1 is provided. It comprises a safety post that serves as a chassis or support for a box housing a computer connected to a keyboard and a screen located on the post.

This screen rotates freely for greater comfort of the operator and thus can rotate when making adjustments to the vehicle. The above mentioned box incorporates a proximity sensor and a camera projecting the image of the car's front axle in order to place it in the ideal position for the alignment.

Due to the design, the operator that uses the described service unit, will be able to work with greater security against impacts than today, as it includes security posts completely anchored to the ground, which creates greater resistance to impacts Similarly, and due to the location of the incorporated computer, the operator will always have to enter the screen data behind the security post, so that his physical integrity at any time will be put at risk. Similarly, the computer will be positioned so that the operator always sees the car's platform or elevator, leaving clear the view field in the case of any incident in the elevator.

Finally, the furniture can be used in any mechanic shop and can be used for any machine needing alignment, consequently that furniture provides greater versatility in its use inside the mechanic shop, minimizing the economic cost associated to the product purchase, being easily amortized.

Throughout the description and claims, the word "comprise" and its variations are not intended to exclude other technical features, additives, components or steps. For those skilled in the field, other objects, advantages and features of the invention will be explained in the description and in the invention practice. The following examples and drawings are shown for illustrative purposes and do not restrict the current invention, which is defined in claim 1.

### Brief description of the figures

Below is a brief description of a series of drawings which help to understand the invention and which are expressly related to the realization of said invention, which is presented as a non-limiting example thereof.

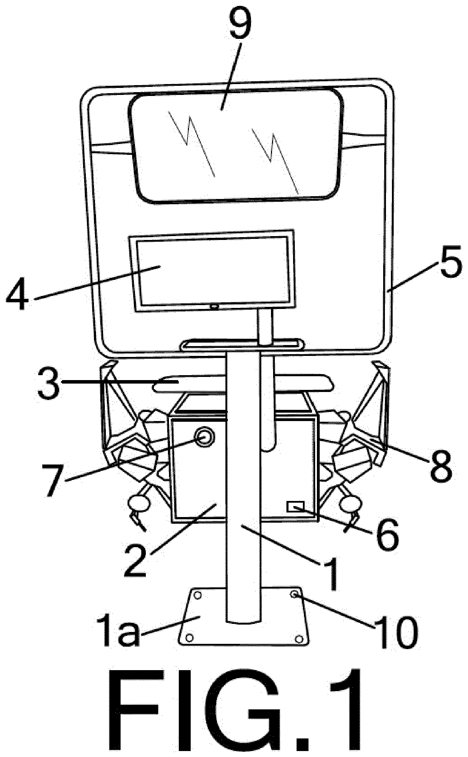

FIG 1 Shows a view of the service unit for the vehicle direction alignment according to the invention.

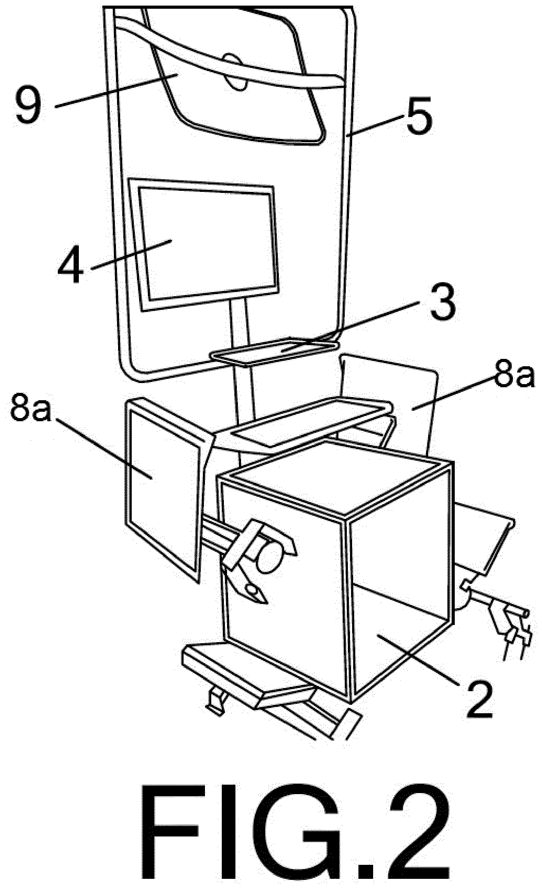

FIG 2 Shows a side view of the service unit.

### Description of a preferred embodiment of the invention

The enclosed drawings show the preferred embodiment of the invention. More specifically, the service unit for the car's direction alignment, object herein, is characterized by comprising a safety post (1) which serves as a chassis or support for a box (2) housing a computer connected with a keyboard (3) and a display screen (4) jointly located on the post (1), and where the screen (4) can rotate freely for greater comfort of the operator who can rotate it when making adjustments in the vehicle.

In the lower part, the furniture includes a box (2) preferably metallic, which stores the computer and incorporates a proximity sensor (6) and a camera (7) which projects the image of the car's front axle in the screen (4), to place it in the ideal position for alignment.

On the sides, the furniture incorporates claws (8) serving as supports for holding sensors (8a) installed to act as receivers of information about the car's front and rear axle measures.

Finally, in a preferred combination, the post (1) will incorporate an arc (5) where a mirror (9) will be installed and will provide a view of the elevator, providing greater visibility when the vehicle is loaded on the elevator or lifting platform.

The post (1), in its lower part, presents a base (1a) that will be anchored to the ground by a plurality of fasteners (10), so that it is capable of anchoring the post (1) against car impacts.

## Claims

1. Service unit for the alignment of a vehicle's direction, the vehicle being placed on a lifting platform, the service unit comprising a safety post (1), a box (2), a computer, a keyboard (3) and a display screen (4), wherein the safety post (1) is adapted to be completely anchored to the ground to create greater resistance to impacts and serves as a support for the box (2) housing the computer connected to the keyboard (3) and the display screen (4) placed on the post (1); **characterized in that** the screen (4) is freely rotatable for greater comfort of an operator who can rotate it when making adjustments in the vehicle; and **in that** said box (2) incorporates a proximity sensor (6) and a camera (7) adapted to project in the screen (4) the image of the front axle of the vehicle to place it in the ideal position for the alignment; and **in that** the computer is positioned so that the operator will always have to enter the screen data behind the post (1) and so that the operator always sees the lifting platform, leaving clear the view field in the case of any incident in said lifting platform.

2. Service unit according to claim 1 incorporating a series of claws (8) on the left and right sides of the box (2) that serve as supports for holding sensors (8a) responsible for receiving information about the car's front and rear axle measures.

3. Service unit according to claim 1 wherein the post (1) includes an arc (5) with a fixed mirror (9) providing a car's view when it is being securely placed on the lifting platform.

4. Service unit according to any of claims 1-3 wherein the post (1) has, in the lower part, a base (1 a) which is adapted to be anchored in the ground by a plurality of fasteners (10).

## Patentansprüche

1. Wartungseinheit zur Ausrichtung der Fahrtrichtung eines Fahrzeugs, wobei das Fahrzeug auf einer Hebeplattform platziert wird, wobei die Wartungseinheit einen Sicherheitspfosten (1), eine Kiste (2), einen Computer, eine Tastatur (3) und einen Anzeigebildschirm (4) umfasst, wobei der Sicherheitspfosten (1) dazu angepasst ist, vollständig am Boden verankert zu werden und einen größeren Widerstand gegen Schläge herzustellen und als Stütze für die Kiste (2) dient, welche den Computer aufnimmt, welcher mit der Tastatur (3) und dem auf dem Pfosten (1) platzierten Anzeigebildschirm (4); **dadurch gekennzeichnet, dass** der Bildschirm (4) für einen größeren Komfort einer Bedienperson, welche er während der Einstellungen im Fahrzeug drehen kann, frei drehbar ist; und dass die genannte Kiste (2) einen Näherungssensor (6) und eine Kamera (7) beinhaltet, welche dazu angepasst ist, das Bild der Vorderachse des Fahrzeugs auf dem Bildschirm (4) zu projizieren, um es in der idealen Position für die Ausrichtung zu platzieren; und dass der Computer derart positioniert ist, dass die Bedienperson die Bildschirmdaten immer hinter dem Pfosten (1) eingeben muss und dass die Bedienperson die Hebeplattform immer sieht, wobei das Blickfeld im Falle eines Vorfalls in der genannten Hebeplattform frei gelassen wird.

2. Wartungseinheit nach Anspruch 1, welche eine Reihe von Klauen (8) auf der linken Seite und der rechten Seite der Kiste (2) umfasst, welche als Stützen für Haltesensoren (8a) dienen, welche dafür zuständig sind, Information über die Messungen des Vorder- und Hinterachse des Wagens zu empfangen.

3. Wartungseinheit nach Anspruch 1, wobei der Pfosten (1) einen Bogen (5) mit einem fixierten Spiegel (9) umfasst, welcher die Sicht eines Wagens bereitstellt, wenn er sicher auf der Hebeplattform platziert wird.

4. Wartungseinheit nach einem der Ansprüche 1-3, wobei der Pfosten (1) eine Grundfläche (1a) im unteren Teil aufweist, welche dazu angepasst ist, am Boden mittels einer Vielzahl von Befestigungselementen (10) verankert zu werden.

## Revendications

1. Unité de service pour l'alignement de direction d'un véhicule, le véhicule étant placé sur une plate-forme de levage, l'unité de service comprenant un poteau de sécurité (1), un boîtier (2), un ordinateur, un clavier (3) et un écran d'affichage (4) dans lequel le poteau de sécurité (1) est adapté pour être complètement ancré au sol et pour créer une plus grande résistance aux impacts et il sert de support pour le boîtier (2) logeant l'ordinateur connecté au clavier (3) et l'écran d'affichage (4) placé sur le poteau (1); **caractérisé en ce que** l'écran (4) peut tourner librement pour un plus grand confort d'un opérateur qui peut le faire tourner lorsqu'il effectue des ajustements dans le véhicule; et **en ce que** ledit boîtier (2) comporte un capteur de proximité (6) et une caméra (7) conçue pour projeter sur l'écran (4) l'image de l'essieu avant du véhicule pour le placer dans la position idéale pour l'alignement; et **en ce que** l'ordinateur est positionné de sorte que les opérateurs doivent toujours introduire les données d'écran derrière le poteau (1) et de sorte que l'opérateur voit toujours la plate-forme de levage, laissant clair le champ de vue dans le cas d'un incident dans ladite plate-forme de levage.

2. Unité de service selon la revendication 1 comportant une série de griffes (8) sur les côtés gauche et droit du boîtier (2) qui servent de supports pour capteurs de rétention (8a) responsables de recevoir de l'information sur les mesures des essieux avant et arrière de la voiture.

3. Unité de service selon la revendication 1, dans laquelle le poteau (1) comprend un arc (5) avec un miroir fixe (9) fournissant une vue de la voiture lorsqu'elle est située en toute sécurité sur la plate-forme de levage.

4. Unité de service selon l'une quelconque des revendications 1 à 3, dans laquelle le poteau (1) présente, dans la partie inférieure, une base (1a) qui est adaptée pour être ancrée au sol par une pluralité d'éléments de fixation (10).
